(19) Europäisches Patentamt
European Patent Office
Office européen des brevets

(11) **EP 1 478 949 B1**

(12) **EUROPÄISCHE PATENTSCHRIFT**

(45) Veröffentlichungstag und Bekanntmachung des Hinweises auf die Patenterteilung:
**17.09.2014 Patentblatt 2014/38**

(21) Anmeldenummer: **03706298.1**

(22) Anmeldetag: **07.02.2003**

(51) Int Cl.:
***G01V 3/08*** (2006.01)

(86) Internationale Anmeldenummer:
**PCT/DE2003/000354**

(87) Internationale Veröffentlichungsnummer:
**WO 2003/073132 (04.09.2003 Gazette 2003/36)**

(54) **VERFAHREN UND MESSGERÄT ZUR ORTUNG EINGESCHLOSSENER OBJEKTE**

METHOD AND MEASURING DEVICE FOR LOCATING ENCLOSED OBJECTS

PROCEDE ET APPAREIL DE MESURE PERMETTANT DE LOCALISER DES OBJETS ENCLOISONNES

(84) Benannte Vertragsstaaten:
**CH DE ES FR GB IT LI**

(30) Priorität: **21.02.2002 DE 10207426**

(43) Veröffentlichungstag der Anmeldung:
**24.11.2004 Patentblatt 2004/48**

(73) Patentinhaber: **ROBERT BOSCH GMBH**
**70442 Stuttgart (DE)**

(72) Erfinder:
• **CLAUSS, Stefan**
**70771 Leinfelden-Echterdingen (DE)**
• **SKULTETY-BETZ, Uwe**
**70771 Leinfelden-Echterdingen (DE)**
• **HAASE, Bjoern**
**70182 Stuttgart (DE)**
• **HOFFMANN, Ulli**
**75223 Nieffern-Oeschelbronn (DE)**

(56) Entgegenhaltungen:
EP-A- 0 438 159     WO-A-94/04932
WO-A-98/30921     SU-A- 563 494

## Beschreibung

Stand der Technik

Die Erfindung betrifft ein Verfahren bzw. ein Meßgerät zur Ortung von in einem Medium eingeschlossenen Objekten nach dem Oberbegriff des Anspruchs 1 bzw. des Anspruchs 7.

Ein solches Verfahren bzw. ein Meßgerät zur Durchführung dieses Verfahrens nutzt eine kapazitive Sensorvorrichtung, die ein Detektionssignal, beispielsweise in Form eines elektromagnetischen Feldes erzeugt, so dass das Detektionssignal das zu untersuchende Medium durchgreift, zumindest jedoch in ausreichendem Maße in das Medium eingreift. Ein in dem Medium eingeschlossenes Objekt beeinflußt das Detektionssignal, so dass durch eine Auswertung dieses Detektionssignals Informationen über ein in dem Medium eingeschlossenes Objekt gewonnen werden können.

Ein gattungsgemäßes Meßgerät, beispielsweise ein Studsensor detektiert ein in einem Medium eingeschlossenes Objekt durch die Änderung der elektrischen Kapazität seiner kapazitiven Sensorvorrichtung, welche das eingeschlossene Objekt erzeugt. Ein in einem Medium eingeschlossenes Objekt ändert die dielektischen Eigenschaften des Mediums, so dass ein in die Nähe des Objekts gebrachter Meßkondensator eine auf das Objekt zurückgehende Kapazitätsänderung bzw. eine Änderung seiner Impedanz erfährt. Diese Kapazitätsänderung läßt sich beispielsweise durch den Verschiebestrom des Meßkondensators der kapazitiven Sensorvorrichtung messen.

Aus der US 6,249,113 B1 ist ein kompakter, handgehaltener Studsensor bekannt, der zur Ortung eingeschlossener Objekte die Kapazitätsänderungen in einem Sensorschaltkreis detektiert, wenn das Meßgerät über eine Wand verfahren wird. Zur Anzeige des genauen Ortes an dem ein eingeschlossenes Objekt in dem Medium geortet wurde, besitzt das Meßgerät der US 6,249,113 B1 ein Array von LEDs, welches pfeilförmig auf der Gehäuseoberfläche des Meßgerätes angeordnet ist. Wird ein Objekt von dem Meßgerät detektiert, so wird abhängig von der Signalstärke ein LED-Paar der pfeilförmigen LED-Anordnung auf dem Gehäuse des Meßgerätes aktiviert. Je näher man dem eingeschlossenen Objekt kommt, d.h. je stärker das vom Objekt erzeugte Detektionssignal ist, desto weiter wandern die aktivierten LEDs in die Pfeilspitze des LED Arrays. Befindet sich das Meßgerät letztendlich direkt über dem eingeschlossenen Objekt, so ist die Pfeilspitze des LED Arrays erleuchtet, so dass prinzipiell mit dem Meßgerät der US 6,249,113 B1 eine Lokalisierung von in einem Medium, beispielsweise einer Wand, eingeschlossenen Objekten möglich ist. Nicht möglich ist mit dem in der US 6,249,113 B1 offenbarten Vorrichtung zur Ortung in einem Medium eingeschlossener Objekte sowie dem zugrundeliegenden recht einfachen Verfahren eine Messung der Tiefe in der das Objekt eingeschlossen ist.

Die WO 94/04932 offenbart eine tragbare Vorrichtung zur Ortung hinter einer Oberfläche positionierter Gegenstände mit einem Sensor zur Detektion einer durch das Objekt hervorgerufenen zusätzlichen Kapazität, mit einer Auswerteeinheit für das Detektionssignal sowie mit einem Display zur Darstellung der Meßergebnisse. Das Meßgerät der WO 94/04932 besitzt darüber hinaus eine Vorrichtung, die es erlaubt die Sensorvorrichtung in einem hochsensitiven bzw. in einem weniger sensitiven Mode zu betreiben.

Die WO 94/04932 offenbart darüber hinaus ein Verfahren zur Bestimmung des Ortes eines hinter einer Oberfläche positionierten Objektes. Dazu wird das entsprechende Meßgerät über die zu untersuchende Wand verfahren. Der Sensor der WO 94/04932 hat die Möglichkeit einen Anstieg bzw. eine Verringerung der Dichte des Materials zu sensieren. Dies ermöglicht es der Anordnung, den Anwender beispielsweise darüber zu informieren, dass der Sensor falsch, beispielsweise direkt oberhalb eines Einschlusses kalibriert worden ist. Das zugrunde liegende Verfahren ermöglicht weiterhin, den Anwender davon in Kenntnis zu setzen, dass das untersuchte Medium zu dick bzw. zu dünn ist, ein eingeschlossenes Objekt zu detektieren.

Ein digitaler Speicher des Meßgerätes der WO 94/04932 ermöglicht es, des Kalibrierungsdaten so lange zu speichern, wie das Meßgerät eingeschaltet ist.

Aus der US 6,198,271 B1 ist ein Studsensor bekannt, der zur Ortung von in einer Wand eingeschlossenen Objekten die Kapazitätsänderungen von drei, meßgerätintegrierten kapazitiven Sensoren detektiert, während der Sensor über die Wand verfahren wird. Ein Auswertungsschaltkreis überwacht die relativen Zeiten, die zur Aufladung der drei kapazitiven Elemente notwendig sind, so dass während der Sensor über die zu untersuchende Wand verfahren wird, Änderungen in den relativen Kapazitäten der drei Sensorelemente aufgrund einer vom eingeschlossenen Objekt verursachten Änderung der Dielektrizitätskonstanten des untersuchten Materials gemessen werden können. Die Vergleichsschaltung nutzt diese Änderungen in den gemessenen relativen Kapazitäten der einzelnen Sensorelemente um das eingeschlossene Objekt zu lokalisieren.

Das Meßgerät der US 6,198,271 B1 weist eine Anzeige bestehend aus einer Mehrzahl von Anzeigeelementen auf, die derart mit der Auswerteeinheit des Meßgerätes verschaltet sind, dass nur diejenigen Elemente ein Signal anzeigen, die direkt oberhalb des georteten Objektes sich befinden. Auf diese Weise ist es möglich, das Meßgerät über dem georteten Objekt zu zentrieren und das Objekt dadurch indirekt zu lokalisieren.

Aus der WO 98/30921 ist eine Vorrichtung bekannt, die es ermöglicht, die Tiefe, die Größe, die Form sowie die Orientierung eines in einem Untergrund eingeschlossenen Objektes, insbesondere von Minen zu detektieren. Die Vorrichtung der WO 98/30921 ermöglicht es dabei insbesondere zwischen metallischen Minen und anderen Objekten zu unterscheiden. Ein dielektrischer Sensor der Vorrichtung weist dazu eine erste und eine zweite Elektrode auf. Die erste Elektrode wird mit einem alternierenden Spannungssignal beaufschlagt, so dass ein veränderliches Wechselfeld in das zu untersuchende Gebiet, beispielsweise ein minenkontaminierter Untergrund eingreift und von der zweiten Elektrode detektiert wird. Die Spannung an der zweiten Elektrode wird in Betrag und Phase gemessen. Darüber hinaus weist die Vorrichtung der WO 98/30921 auch ein Magnetometer auf, der es ermöglicht metallische Objekte von nichtmetallischen Objekten zu unterscheiden. Zur Detektion eines eingeschlossenen Objektes wird die Sensorvorrichtung der WO 98/30921 mittels einer längeren Stange über den zu untersuchenden Untergrund bewegt und das Ortungssignal detektiert. Zur Kartographisierung des untersuchten Untergrundes sieht die WO 98/30921 vor, Metallgittermatten auf den zu untersuchenden Untergrund zu legen, so dass das Metallraster dieser Matten ebenfalls vermessen werden kann und eine gewisse Zuordnung der Messsignale zur Position ermöglicht wird.

Vorteile der Erfindung

Das erfindungsgemäße Verfahren zur Ortung von in einem Medium eingeschlossenen Objekten nutzt ein von einer kapazitiven Sensorvorrichtung erzeugtes Detektionssignal, welches in das zu untersuchende Medium eingreift und durch ein im Medium vorhandenes Objekt beeinflußt wird. Durch eine Auswertung des Detektionssignals bei Vorhandensein eines eingeschlossenen Objektes im Vergleich zu einem Detektionssignal, wie es sich ergäbe bei abwesendem Objekt, lassen sich Informationen über das im Medium eingeschlossene Objekt gewinnen. Das erfindungsgemäße Verfahren nutzt zur Detektion des eingeschlossenen Objektes die Kapazitätsänderung einer kapazitiven Sensorvorrichtung, die sich durch die Änderung der Dielektrizitätskonstanten des vermessenen Mediums durch das eingeschlossene Objekt ergibt. Die Änderung der Dielektrizitätskonstanten läßt sich durch die Messung der Impedanz zwischen den Elektroden der kapazitiven Sensorvorrichtung bestimmen.

Erfindungsgemäß ist im vorgeschlagenen Verfahren vorgesehen, dass zur Erlangung einer Tiefeninformation über das in dem Medium eingeschlossene Objekt eine Phasenmessung, insbesondere eine Phasenmessung einer mit einem Verschiebestrom der kapazitiven Sensorvorrichtung korrelierten Meßgröße genutzt wird.

Legt man eine Spannung zwischen den Elektroden der kapazitiven Sensorvorrichtung an, so resultiert ein elektrisches Streufeld, das sich in einem Bereich ausserhalb der Elektroden erstreckt und somit in ein zu untersuchendes Objekt eingreifen kann. In vorteilhafter Weise lässt sich solch einem Feld auch eine gewünschte Richtcharakteristik aufprägen. Legt man zwischen die Elektroden der Sensorvorrichtung insbesondere eine Wechselspannung an, so fließt zwischen den Elektroden entlang der elektrischen Feldlinien, welche die beiden Elektroden verbinden, ein Verschiebestrom. Dieser Verschiebestrom ist bei fester Spannung um so größer, je geringer die Impedanz des Meßkondensators bzw. um so größer seine Kapazität ist. Ein im Bereich der Feldlinien befindliches Objekt führt zu einer Änderung der Impedanz zwischen den Sensorelektroden und somit zu einem veränderten Verschiebestrom. Mißt man nun nicht nur den Betrag des Verschiebestromes sondern zusätzlich auch seine Phase, so läßt sich zusätzlich zur reinen Lokalisierung eines eingeschlossenen Objektes auf der Oberfläche des einschließenden Mediums auch eine Information über die Tiefe des eingeschlossenen Objektes hinter der Oberfläche des Mediums gewinnen.

Es ist mit dem erfindungsgemäßen Verfahren auch möglich, eine Unterscheidung durchzuführen zwischen Objekten, die dielektrisch dichter (z.B. Kupferkabel) als das einschließende Medium und andererseits Objekten mit im Vergleich zum einschließenden Medium geringerer Dielektrizitätskonstanten $\varepsilon$ (beispielsweise Kunststoffrohre). Im ersten Fall werden die Verschiebeströme durch das eingeschlossene Objekt verstärkt, im zweiten Fall verringern sich diese. Es ergibt sich damit eine um 180° geänderte Phasenlage, so dass eine eindeutige Identifizierung der Objekte bezüglich der Größe ihrer Dielektrizitätskonstanten möglich ist.

Durch die in den weiteren Ansprüchen aufgeführten Maßnahmen und Merkmalen sind vorteilhafte Verbesserungen und Weiterbildungen des in Anspruch 1 angegebenen Verfahrens möglich.

Die durch ein eingeschlossenes Objekt hervorgerufene Änderung des Verschiebestromes, bzw. die Änderung der Kapazität der Sensorvorrichtung läßt sich an Hand von verschiedensten elektronischen Schaltungen ausmessen. In dem erfindungsgemäßen Verfahren wird in vorteilhafter Weise nicht direkt der Verschiebestrom zur Auswertung des Detektionssignals gewählt, sondern in vorteilhafter Weise eine Meßgröße, die in linearem Zusammenhang zum Verschiebestrom der kapazitiven Sensorvorrichtung steht. Dadurch, dass nicht direkt der Verschiebestrom sondern eine Meßgröße M gemessen wird, ist es möglich, Störungen des Meßsignals, die beispielsweise aus Übersprecheffekten oder Phasenverzerrungen aufgrund der Frequenzcharakteristik der Auswerteschaltung resultieren, aus dem Meßsignal herauszurechnen.

Prinzipiell ist jede elektrische Meßgröße geeignet, welche in beliebiger Form mit der Impedanz des Sensorelementes verknüpft ist. Die Änderung des Verschiebestroms, bzw. die Änderung der Kapazität der Sensorvorrichtung läßt sich an Hand von verschiedensten elektronischen Schaltungen messen. Beispielsweise läßt sich die Eigenfrequenz eines Schwingkreises, welcher aus dem Meßkondensator und einer dazu in Serie oder parallel geschalteten Spule gebildet wird vermessen. Nach Anregung mit einem kurzen elektrischen Impuls wird ein solcher Schwingkreis eine gedämpfte Schwingung mit seiner Resonanzfrequenz ausführen. Das zeitaufgelöste Vermessen dieser Resonanz ermöglicht somit Rückschlüsse auf die beteiligten Verschiebeströme. In vorteilhafter Weise wird bei dem erfindungsgemäßen Verfahren zur Bestimmung der durch ein eingeschlossenes Objekt hervorgerufenen Impedanzänderungen eine elektrische Spannung innerhalb einer Auswerteschaltung für das Detektionssignal gemessen. Diese Spannungswerte lassen sich in einfacher Weise durch eine entsprechende Abtastschaltung bezüglich ihres Betrages und ihrer Phasen mit hoher Genauigkeit bestimmen.

Durch die Verwendung eines Detektionssignales, welches mehrere Frequenzen aufweist, bzw. durch ein spektral breites Detektionssignal läßt sich insbesondere das Signal-Rausch-Verhältnis der Messung verbessern. Darüber hinaus ergibt sich durch die Messung und Auswertung bei mehr als einer Frequenz die Möglichkeit das geortete, eingeschlossene Objekt hinsichtlich seiner Metall-Nichtmetall-Eigenschaften zu unterscheiden. Bei Verwendung mehrerer Meßfrequenzen ist es alternativ auch möglich, mehrere Ziele in unterschiedlicher Tiefe gleichzeitig zu erkennen, obwohl deren Signale sich überlagern. Dieser Fall würde bei einer rein monofrequenten Messung zu einer Verfälschung der Messergebnisse führen. Darüberhinaus ermöglicht ein spektral breiter elektrische Impuls als Anregungssignal Uneindeutigkeiten der Phasenmessung durch den Vergleich der Messergebnisse bei verschiedenen Frequenzen zu vermeiden.

Um auch geringste Kapazitätsänderungen durch kleine, eingeschlossene Objekte bzw. Objekte, deren Dielektrizitätskonstante sich nur unwesentlich von der Konstanten des umgebenden Materials unterscheidet, detektieren zu können, ist bei dem erfindungsgemäßen Verfahren vorgesehen, Meßfrequenzen zu benutzen, die typischerweise in einem Intervall von 100 MHz bis 10.000 MHz liegen. In vorteilhafter Weise werden vorzugsweise Meßfrequenzen für das Detektionssignal benutzt, die in einem Intervall zwischen 1000 MHz und 5000 MHz liegen. Optimale Messfrequenzen für das erfindungsgemäße Verfahren beziehungsweise ein dieses Verfahren anwendendes Messgerät bilden Frequenzen in einem Intervall zwischen typischerweise 1500 MHz und 3500 MHz.

Diese hohen Frequenzen ermöglichen selbst bei sehr geringen Kapazitätsänderungen aufgrund eines eingeschlossenen Objektes hinreichend große Änderungen des Verschiebestromes, so dass solche Kapazitätsänderungen sowie die sie erzeugenden Objekte mit einer entsprechend hohen Empfindlichkeit gemessen werden können. Andererseits erfordern solch hohe Frequenzen eine entsprechend komplexe Messtechnik. Während bei niedrigen Frequenzen die Phasenverschiebung zwischen Strom und Spannung am kapazitiven Sensorelement 90° beträgt, beobachtet man bei höheren Frequenzen aufgrund von induktiven Effekten Abweichungen dazu. Zusätzlich zur beobachteten Änderungen des Imaginärteils der Impedanz können abhängig von der Dämpfung des Dielektrikums des Meßkondensators bei höheren Frequenzen auch bedeutende ohmsche Anteile in der Impedanz beobachtet werden. Diese induktiven Störeffekte lassen sich bei dem erfindungsgemäßen Verfahren dadurch eliminieren, dass nicht direkt der dielektrische Verschiebestrom der kapazitiven Sensorvorrichtung gemessen wird, sondern eine mit diesem Verschiebestrom in linearer Weise korrelierte Meßgröße. Die frequenzabhängigen Konstanten, die das Verhältnis des dielektrischen Verschiebestromes zur im erfindungsgemäßen Verfahren gemessenen Meßgröße M festlegen, sind unabhängig meßbar, so dass sich zwei Freiheitsgrade zur Kompensation von Störeffekten ergeben. So können diese Koeffizienten durch Referenzmessungen an definierten Impedanzen bestimmt werden und dem erfindungsgemäßen Verfahren bei der Auswertung zur Verfügung gestellt werden.

In vorteilhafter Weise wird bei dem erfindungsgemäßen Verfahren das Detektionssignal zur Ortung eines in einem Medium eingeschlossenen Objektes als Funktion der lateralen Verschiebung der das Detektionssignal erzeugenden kapazitiven Sensorvorrichtung auf der Oberfläche des einschließenden Mediums ausgewertet. Auf diese Weise ist es zum einen möglich, den Ort des eingeschlossenen Objektes, d.h. seine laterale Lage in dem einschließenden Medium sehr genau zu vermessen, andererseits gestattet eine Messung der Sensorsignale als Funktion der lateralen Verschiebung des Sensors über das Objekt hinweg, die Meßgenauigkeit weiter zu erhöhen. Je nach Verschiebung des Sensors wird ein anderes Ensemble von Feldlinien des elektrischen Messfeldes der kapazitiven Sensorvorrichtung durch das Objekt beeinflußt. Es ergibt sich somit für die Phasenlage des Meßsignals eine charakteristische Abhängigkeit von der Tiefe des Objektes sowie von der lateralen Verschiebung.

Auch kann die ortaufgelöste Messung des Detektionssignales genutzt werden, um das Untergrundsignal, dass allein von dem einschließenden Medium herrührt, besser zu diskriminieren.

Über eine Schwellwertsensorik, die beispielsweise auch abhängig vom Material des einschließenden Mediums sein kann, läßt sich so in vorteilhafter Weise für das erfindungsgemäße Verfahren ein Entscheidungsschritt realisieren, der zu dem Ergebnis kommt, ob ein eingeschlossenes Objekt vorliegt oder nicht.

Ebenso läßt sich durch das Verschieben der kapazitiven Sensorvorrichtung, die in vorteilhafter Weise dazu mit einer Wegsensorik gekoppelt ist, über den Abfall der Signalstärke ein Maß für die Objektgröße gewinnen, so dass mit dem erfindungsgemäßen Verfahren nicht nur die laterale Position des Objektes in dem Medium, seine Tiefe relativ zur Oberfläche des Mediums sondern darüber hinaus auch noch Angaben zur Objektgröße gemacht werden können.

In vorteilhafter Weise läßt sich das erfindungsgemäße Verfahren für eine kapazitive Sensorvorrichtung eines Meßgerätes einsetzen, das der Ortung von in Medien eingeschlossenen Objekten dient. Insbesondere ist es möglich, mit Hilfe des erfindungsgemäßen Verfahrens ein kompaktes, handgehaltenes Ortungsgerät zu realisieren, das die Detektion von Einschlüssen beispielsweise in Wänden, Decken und/oder Böden mit einer hohen Genauigkeit ermöglicht.

Ein solches erfindungsgemäßes Meßgerät weist neben einer entsprechenden kapazitiven Sensorvorrichtung und den Mitteln zur Erzeugung und Auswertung eines Detektionssignals dieser Sensorvorrichtung in vorteilhafter Weise eine Ausgabeeinheit, beispielsweise ein Display, auf, das es ermöglicht, die ermittelten Meßergebnisse, insbesondere den Ort und die Tiefe eines in dem Medium eingeschlossenen Objektes ortsaufgelöst auf der Anzeigevorrichtung des Meßgerätes darzustellen. Dazu ist ein solches Meßgerät mit einer Steuer- und Auswerteeinheit zu versehen, die mit der Sensorvorrichtung in Verbindung steht und Mittel aufweist, die es in vorteilhafter Weise ermöglichen, die ortsaufgelösten Meßergebnisse in Echtzeit, also noch während das Meßgerät beispielsweise über eine Wand verfahren wird, auf dem Display des Meßgerätes direkt anzuzeigen.

Das erfindungsgemäße Meßgerät bzw. das zugrundeliegende erfindungsgemäße Verfahren ermöglicht dem Anwender eine genaue Lokalisierung eines in einem Medium eingeschlossenen Objektes in allen drei Dimensionen des Raumes. Darüber hinaus ist es möglich mit dem erfindungsgemäßen Verfahren Informationen über die Größe des eingeschlossenen Objektes zu erhalten.

Zeichnung

In der Zeichnung ist ein Ausführungsbeispiel des erfindungsgemäßen Verfahrens dargestellt, das in der nachfolgenden Beschreibung näher erläutert werden soll. Die Figuren der Zeichnung, deren Beschreibung sowie die auf das erfindungsgemäße Verfahren bzw. das dieses Verfahren nutzende Meßgerät gerichteten Ansprüche enthalten zahlreiche Merkmale in Kombination. Ein Fachmann wird diese Merkmale auch einzeln betrachten und so zu weiteren sinnvollen Kombinationen zusammenfassen.

Es zeigen:

Fig. 1     eine schematische Darstellung der dem erfindungsgemäßen Verfahren zugrundeliegenden Meßsituation,

Fig. 2     ein Blockschaltbild zur Impedanzmessung nach dem erfindungsgemäßen Verfahren,

Fig. 3     eine symbolische Darstellung der Temperaturabhängigkeit des ausgewerteten Messsignales $M(\omega)$,

Fig. 4     ein Blockdiagramm zur Darstellung von Verfahrensschritten zur Aufnahmen von Referenzwerten,

Fig. 5     ein Blockdiagramm zur Darstellung der Verfahrensschritte des erfindungsgemäßen Verfahrens.

Beschreibung eines Ausführungsbeispiels

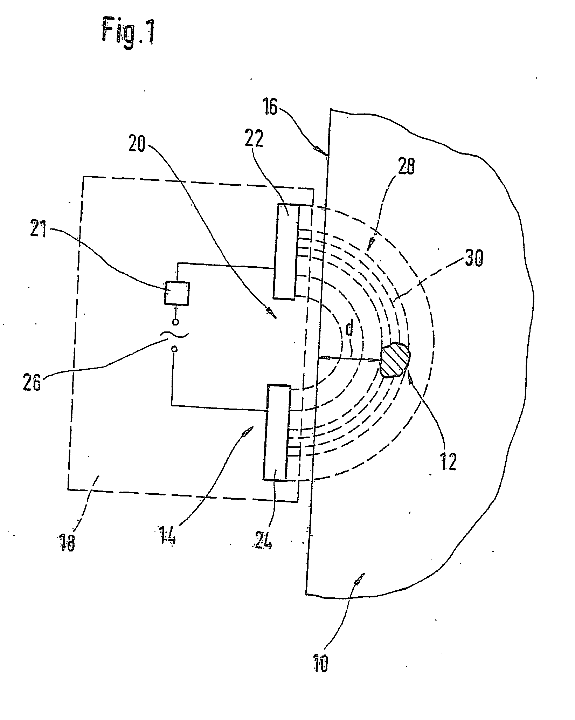

Fig. 1 zeigt die schematische Darstellung einer typischen Meßsituation zur Anwendung des erfindungsgemäßen Verfahrens bzw. zur Nutzung des erfindungsgemäßen Meßgerätes. Ein in einem Medium 10 eingeschlossenes Objekt 12 soll mit Hilfe einer kapazitiven Sensorvorrichtung 14 detektiert werden. Das eingeschlossene Objekt 12 befindet sich in einem Abstand d von einer Oberfläche 16 des einschließenden Mediums 10. Ein Meßgerät 18, welches u.a. den kapazitiven Sensor 14 enthält, wird auf die Oberfläche 16 des das Objekt 12 einschließenden Mediums 10 aufgebracht. Die kapazitive Sensorvorrichtung 14 besteht im Wesentlichen aus einem Meßkondensator 20 der zwei Kondensatorelektroden 22 bzw. 24 aufweist. Lediglich zur grafischen Verdeutlichung des Meßprinzips sind diese Kondensatorelektroden 22 und 24 in der Fig. 1 nebeneinander gezeichnet. In einer realen kapazitiven Sensorvorrichtung werden die Elektroden eines Meßkondensators im Wesentlichen parallel zueinander angeordnet sein. Die gewünschte Richtwirkung des elektrischen Feldes des Messkondensators 20 wird durch entsprechende Elektroden oder geometrische Mittel erzeugt.

Durch Anlegen einer elektrischen Spannung 26 wird ein elektrisches Feld 28 zwischen den Elektroden 22 bzw. 24 des Meßkondensators 20 des Meßgerätes 18 erzeugt. Legt man an die beiden Elektroden des Meßkondensators insbesondere eine Wechselspannung an, so fließt zwischen den Kondensatorelektroden entlang der das elektrische Feld 28 beschreibenden Feldlinien 30 ein sogenannter Verschiebestrom. Dieser Verschiebestrom I ist bei fester Spannung U um so größer, je geringer die Impedanz, d.h. der komplexe Widerstand Z des Meßkondensators 20 ist. Der Verschiebestrom I kann beispielsweise direkt über eine Amperemeter 21 oder auch über eine mit dem Verschiebestrom korrelierten Messgröße M, wie beispielsweise einem Spannungssignal gemessen werden.

Die Impedanz Z des Meßkondensators 20 wird im Wesentlichen bestimmt durch die zwischen den Kondensatorelektroden 22 bzw. 24 befindliche Materie. Wird ein solcher Meßkondensator 20 nun in die Nähe eines eingeschlossenen Objektes 12 gebracht, so ändert sich die Zusammensetzung der Materie in dem vom elektrischen Feld 28 überstrichenen Bereich. Insbesondere ergibt sich durch ein eingeschlossenes Objekt 12 eine geänderte Dielektrizitätskonstante $\varepsilon$ und damit eine geänderte Impedanz Z im Vergleich zu einem Medium 10 ohne eingeschlossenes Objekt 12.

Die durch das eingeschlossene Objekt 12 verursachte Änderung der Dielektrizitätskonstanten sowie die damit einhergehende Änderung der Impedanz Z des Meßkondensators entspricht einer geänderten Kapazität C des Meßkondensators.

Die Vergrößerung der Kapazität C des Meßkondensators 20 bzw. die daraus resultierende Vergrößerung des Verschiebestromes I zwischen den Kondensatorelektroden ist in Fig. 1 durch eine Vergrößerung der Feldliniendichte in der Darstellung des elektrischen Feldes 28 im Feldlinienbild verdeutlicht.

Das Einbringen eines Materials mit einer größeren Dielektrizitätskonstanten $\varepsilon$ als der entsprechenden Konstanten des umgebenden Mediums 10 in den vom kapazitiven Sensor 14 erzeugten Feldbereich 28 führt zu einer Verdichtung der Feldlinien, ein Objekt mit geringerer Dielektrizitätskonstante als das umgebende Material führt im Bereich des eingeschlossenen Objektes zu einer Reduzierung der Feldliniendichte.

Die Kapazitätsänderung aufgrund eines eingeschlossenen Objektes bzw. die Veränderung des Verschiebestromes am kapazitiven Sensor läßt sich an Hand von verschiedenen elektronischen Schaltungen messen und auswerten.

Beispielsweise kann die Eigenfrequenz eines Schwingkreises, welcher gebildet wird durch dem Meßkondensator und mindestens einer dazu in Reihe oder parallel geschalteten Spule genutzt werden. Nach Anregung durch einen kurzen elektrischen Impuls wird ein solcher Schwingkreis eine gedämpfte Schwingung seiner Resonanzfrequenz ausführen. Ein zeitaufgelöstes Vermessen dieser Resonanzfrequenz ermöglicht damit Rückschlüsse auf die beteiligten Kapazitäten und somit auf den Verschiebestrom.

Alternativerweise ist eine direkte Vermessung des Verschiebestroms durch den Meßkondensator bei Anlegen einer konstanten Wechselspannung fester Frequenz möglich.

Im erfindungsgemäßen Verfahren wird nicht direkt der elektrische Verschiebestrom I der kapazitiven Sensorvorrichtung 14 gemessen, sondern zur Auswertung des Detektionssignals wird eine frequenzabhängige Meßgröße M vermessen, die in nahezu linearer Abängigkeit zum Verschiebestrom der kapazitiven Sensorvorrichtung steht. Als Messgröße M wir bei dem erfindungsgemäßen Verfahren insbesondere eine mit dem Verschiebestrom korrelierte elektrische Spannung vermessen. D.h. es gilt für die genutzte Meßgröße M:

$$M = M(\omega) = \alpha(\omega) + \beta(\omega) * I(\omega)$$

Die komplexe Meßgröße $M(\omega)$ wird in linearer Näherung des Verschiebestromes $I(\omega)$ des Meßkondensators ausgewertet. Dabei beschreibt $\alpha(\omega)$ ein internes Übersprechen der Kondensatorelektroden und $\beta(\omega)$ berücksichtigt die Frequenzcharakteristik sowie Phasenverzerrungen auf den elektrischen Leitungen innerhalb der Auswerteschaltung und des Anpaßnetzwerks der kapazitiven Sensorvorrichtung.

$\alpha(\omega)$ und $\beta(\omega)$ sind frequenzabhängige Konstanten, die unabhängig meßbar sind. Diese können beispielsweise durch eine Referenzmessung an definierten Impedanzen sehr genau bestimmt werden, so dass durch die Messung von M auch der Verschiebestrom gemessen wird.

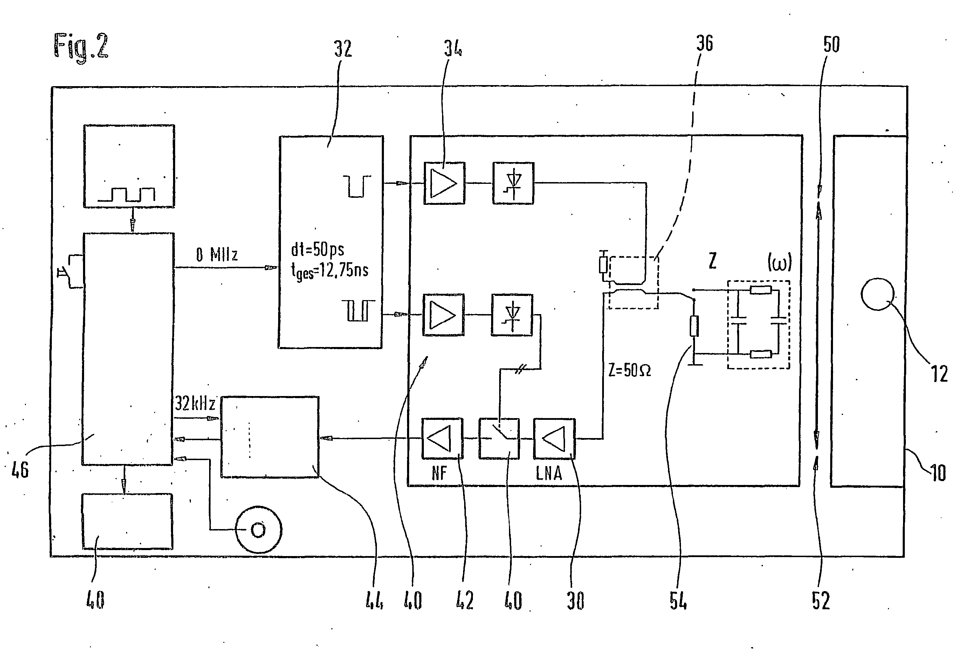

Fig. 2 zeigt ein Ausführungsbeispiel für eine Auswerteschaltung, wie sie im Rahmen des erfindungsgemäßen Verfahrens genutzt werden kann. Ein von einer Zeitbasis 32 gesteuerter Pulsgenerator 34 erzeugt einen zeitlich kurzen, spektral breiten Spannungsimpuls der über einen Wellenkoppler 36 in die kapazitive Sensorvorrichtung 14 eingespeist werden kann. Die Kapazität des Meßkondensators 20 und damit die Impedanz Z des Sensors sind abhängig vom dielektrischen Medium, welches das elektrische Feld der Kondensatorelektroden durchdringt.

Wird die kapazitive Sensorvorrichtung in die Nähe eines Objektes 12 gebracht, so kommt es zu Feldverzerrungen des elektrischen Feldes aufgrund der geänderten Dielektrizitätskonstanten des Kondensatorfeldes. Die Impedanz Z wird dadurch geändert und ist über den Verschiebestrom beziehungsweise die abgeleitete Messgröße $M(\omega)$ messbar. Die Impedanz des kapazitiven Sensors wird als ein zeitabhängiges Spannungssignal U(t) durch den Richtkoppler 36 wieder ausgekoppelt, verstärkt und einer Abtasteinheit 40 zugeführt, in der der Betrag und die Phase des Messsignales bestimmt wird, was im Folgenden etwas genauer beschrieben wird.

An dem Punkt, an dem der Messsensor 14 an die wellenwiderstandsrichtig abgestimmte Leitung angeschlossen wird, erfolgt eine mehr oder weniger ausgeprägte Reflexion der vom Generator über den Wellenkoppler 36 eingekoppelten Spannungen. Die Amplitude und Phase des an diesem Punkt reflektierten Signals spiegelt die Differenz der Impedanz Z des Sensors 14 und des Leitungswellenwiderstandes wieder und gestattet, auf Betrag und Phase der Impedanz des Sensors 14 zurückzuschließen und somit Betrag und Phase des Stromflusses durch den Sensor 14 zu bestimmen.

Die Bestimmung von Betrag und Phase des Stromflusses durch den Sensorkondensator 14 kann daher auf die Bestimmung von Betrag und Phase der am Anschlusspunkt des Sensors 14 reflektierten Spannung U zurückgeführt werden.

Die am Anschlusspunkt reflektierten Signale laufen über den Wellenkoppler zurück. Die durch das Übersprechen im Wellenkoppler 36 im Sendezweig induzierten Signale sind im Vergleich zu den direkt in Richtung des Detektionszweiges rücklaufenden Signalanteile vernachlässigbar. Die am Eingang der Detektionsschaltung anliegende Spannung V spiegelt, abgesehen von den geringfügigen Verlusten am Wellenkoppler 36 und der Laufzeitdifferenz, die am Anschlusspunkt des Sensors 14 reflektierte Spannung U wieder.

Die sich hinter dem Wellenkoppler 36 ergebende (in der Regel geringe) Spannung wird im Detektionszweig vorteilhaft zunächst in einem Hochfrequenzverstärker 38 verstärkt. Anschließend erfolgt eine Abtastung der Spannung zu definierten Zeitpunkten T. Die Zeitpunkte zu denen die Spannung gemessen wird, werden dabei durch einen Abtastpuls vorgegeben. Um eine Bestimmung der Phase der reflektierten Spannung relativ zur Phase der vom Generator erzeugten Spannung zu ermöglichen, ist es wichtig, dass der Generator des Sendesignals und der Generator des Abtastpulses phasenstarr gekoppelt sind. Dies wird durch Einsatz der Zeitbasis sichergestellt.

Die bei der Frequenz f am Abtastglied anliegenden Spannungsteile

$$V(f) = v(f) * \exp(i\varphi(f))$$

hängen gemäß der Beziehung

$$W(T) = \mathrm{Re} \left( \exp \left( i * 2\pi * f * T \right) * V(f) \right)$$

mit der hinter dem Abtastglied gemessenen Spannung W(T) zusammen. Ein Verschieben des Abtastzeitpunktes T gestattet somit auf Betrag und Phase der Spannung V bei der Frequenz f zurückzuschließen.

Die Spannung W wird vorteilhaft zunächst in einem Niederfrequenzverstärker verarbeitet, um anschließend in einem Analog-Digital-Wandler erfasst zu werden. Durch Vermessung der Spannung W zu verschiedenen Zeitpunkten T ist es somit möglich, neben der Amplitude auch die Phase der reflektierten Spannungsteile zu ermitteln und somit auf Betrag und Phase der im Sensor fließenden Ströme zurückzuschließen.

Nach dem Analog-Digitalwandler 44 wird das Messsignal an einen Digitalen Signalprozessor 46 weitergeleitet.

Das DSP-Element 46 übernimmt sowohl die weitere Signalverarbeitung als auch die Steuerung der Zeitbasis zur Erzeugung sowohl des Anregeimpulses als auch des Abtastimpulses. Das DSP-Element 46 ermöglicht es, die ausgewerteten Meßwerte, d.h. insbesondere die Tiefe des eingeschlossenen Objektes in der Wand, sowie dessen laterale Position relativ zum Meßsensor, in Echtzeit, d.h. noch während des Meßvorganges, auf einem Display 48 wiederzugeben. Auf diese Weise ist es mit dem erfindungsgemäßen Verfahren möglich, bereits während das Gerät noch über beispielsweise eine Wand verfahren wird, einem Anwender im Display zu zeigen, wo und in welcher Tiefe der Wand Objekte eingeschlossen sind.

Zur Gewinnung der lateralen Ortsposition kann die kapazitive Meßvorrichtung in zwei entgegengesetzte Richtungen 50 bzw. 52 über das zu untersuchende Medium verfahren werden. Eine entsprechende Wegsensorik, die die aktuelle Position der kapazitiven Sensorvorrichtung an den digitalen Signalprozessor weiter reicht, ermöglicht die korrelierte Darstellung sowohl der Objekttiefe als auch der lateralen Position des Objektes.

Für das erfindungsgemäße Verfahren ist vorgesehen, dass zu Kalibrierungszwecken anstelle des Meßkondensators 20 eine definierte Referenzimpedanz 54 gemessen werden kann. Dazu besitzt die elektrische Schaltung zur Erzeugung und Auswertung des Detektionssignales Schaltmittel, die im Ausführungsbeispiel der Fig. 2 als symbolischer Schalter 56 dargestellt sind. Diese Schaltmittel ermöglichen es, den Anregungsimpuls nicht in den Meßkondensator 20, sondern zur Referenzimpedanz 54 umzuleiten. Diese definierte Referenzimpedanz 54 kann beispielsweise durch Kurzschließen der Signalleitung erzeugt werden. Eine andere Möglichkeit zur Realisierung einer geräteinternen, definierten Impedanz ist beispielsweise ein "offenes Ende" der Signalleitung. Auf diese Weise besitzt das erfindungsgemäße Verfahren bzw. das erfindungsgemäße Meßgerät eine verfahrensinterne bzw. geräteinterne Kalibriervorrichtung mit der es den zugrunde liegenden Verfahren möglich ist, beispielsweise thermische Driften rechnerisch zu kompensieren.

So ist es insbesondere möglich, durch die Kalibrierungsmessung an der definierten Impedanz 54 die durch das elektrische Netzwerk beeinflußten Konstanten $\alpha(\omega)$ und $\beta(\omega)$, die den Zusammenhang zwischen dem elektrischen Verschiebestrom I der kapazitiven Sensorvorrichtung und der gemessenen Größe $M(\omega)$ herstellen, zu bestimmen und auftretende Driften des Meßsignals $M(\omega)$ gegenüber dem Verschiebestrom $I(\omega)$ nach einer solchen Referenzmessung zu kompensieren.

Wesentliche Drifteffekte ergeben sich vor allem aus Temperaturänderungen und Alterungsprozesse der beteiligten Komponenten. So kann es beispielsweise auch zu zusätzlichen Zeitverzögerungen 8T zwischen dem Anregungs- und dem Abfrageimpuls kommen, was zu Verzerrungen des niederfrequenten Signales führen würde. Da solch eine zusätzliche Zeitverzögerung bei dem fouriertransformierten Messsignal M(ω) lediglich zu einem multiplikativen Faktor führt, lässt sich solch eine Drift des Abtastzeitpunktes noch relativ einfach aus dem Datensatz herausrechnen.

Des Weiteren kann die Pulsleistung sowie die spektrale Form speziell des Anregungsimpulses einer thermischen Drift unterworfen sein. Eine Drift der Frequenzcharakteristik des Hochfrequenzverstärkers läßt sich durch eine solche Referenzmessung ebenfalls kompensieren.

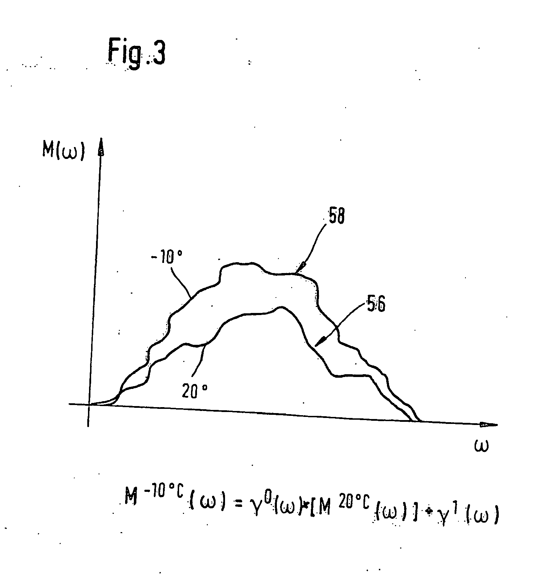

Zur Kompensation von Veränderungen im Gerät, also beispielsweise temperaturbedingten Driften wird eine lineare Korrekturfunktion für das Meßsignal benutzt. Abbildung 3 zeigt in schematischer Weise den Temperatureinfluß auf die Meßgröße M(ω). Die Meßgröße M(ω) unterliege einer starken temperaturabhängigen Änderung. So zeigt die Kurve 56 das frequenzabhänigge Messsignal M(ω) bei einer Temperatur von 20°C. Die ebenfalls dargestellte Messkurve 58 gibt das gemessene Signal M(ω) bei einer Temperatur von -10°C wieder. Das der Auswertung des Meßsignals zugrundeliegende Verfahren geht nun von einer linearen Abhängigkeit der beiden Messkurven bei unterschiedlicher Temperatur aus.

Zur Kompensation dieses Temperatureffektes werden daher zwei Korrekturfaktoren γ0(ω) sowie γ1(ω) um den Zusammenhang der

unter Kalibrierungsbedingungen (z.B. 20°C) gemessenen Meßgröße M(ω) zur Meßgröße M(ω), wie sie sich bei einer Vorort-Messung einstellt, d h. es gilt beispielsweise:

$$M^{-10°}(\omega) = \gamma 0(\omega) * (M^{20°}(\omega)) + \gamma 1(\omega)$$

So wird beispielsweise für das erfindungsgemäße Verfahren die Meßgröße M(ω) für Kalibrierungsbedingungen d.h. bei definierter Temperatur und einer Referenzimpedanz, die beispielsweise durch Luftmessung, einen Kalibrierstein oder einen kurzgeschlossenen Sensor realisiert sein kann, gemessen.

Wird nun unter realen Betriebsbedingungen vor Ort eine Kalibriermessung mit der gleichen definierten Impedanz, also wiederum eine Luftmessung, eine Messung an einem Kalibrierstein bzw. eine Messung mit einem kurzgeschlossenen Sensor, durchgeführt, so kann aus dem nun aufgrund von Drifteffekten veränderten Meßwert M(ω) auf die Korrekurkonstanten γ0(ω) und γ1(ω) geschlossen werden. Die so ermittelten Korrekturgrößen werden in einer Speichereinheit abgelegt, so dass sie bei einer späteren Signalauswertung abgerufen werden können.

Wird eine Kalibriermessung mit definierter Impedanz vor der eigentlichen Messung zur Ortung eines eingeschlossenen Objektes durchgeführt, lassen sich die mit der Kalibriermessung aktuell gewonnenen Korrekurgrößen γ0(ω) und γ1(ω) auch zur Korrektur der Meßgröße M(ω) beim eigentlichen Meßvorgang nutzen.

Auf diese Weise ist es dem erfindungsgemäßen Verfahren möglich, Effekte, die in verfälschender Weise auf die zu verarbeitende Meßgröße einwirken, aus dem gemessenen Meßsignal herauszurechnen. Zu diesen, allgemein als Drifteffekten bezeichneten Einflußnahmen auf die Meßgröße der kapazitiven Sensorvorrichtung gehören insbesondere Temperaturänderungen, Änderungen in der Feuchte, Änderungen, die hervorgerufen werden durch die Alterung von Bauteilen sowie auch Änderungen durch eine Variation der Versorgungsspannung des Meßgerätes. So kann beispielsweise das Ausführungsbeispiel eines erfindungsgemäßen Meßgerätes in Form eines handgehaltenen, batteriebetriebenen Meßgerätes ein Abfall der Batteriespannung noch über einen gewissen Zeitraum kompensiert werden, ohne dass diese Spannungsvariation zu einem deutlichen Einfluß auf die Qualität der Meßergebnisse führen würde.

Neben den beschriebenen Drifteffekten führen auch Exemplarstreuungen einzelner Bauteile zu einer unterschiedlichen Meßcharakteristik jedes einzelnen Meßgerätes, die über die beschriebene Korrekturfunktion kompensiert werden kann. Das erfindungsgemäße Verfahren ermöglicht somit die Kompensation von Drifteffekten oder auch von Exemplarstreuungen durch den Vergleich eines im Gerät gespeicherten Referenzsignales mit einem zum Meßzeitpunkt aufgenommenen Kalibriersignal. Durch diese Vergleichsmessung läßt sich eine lineare Korrekturgröße für das Meßsignal ermitteln, die es dem erfindungsgemäßen Verfahren ermöglicht, die aktuell vor Ort gemessenen Meßwerte auf Referenzbedingungen zurück zu rechnen.

Insbesondere ist es vorteilhaft, eine Referenzmessung direkt nach Fertigung eines Gerätes, beispielsweise noch im Werk unter definierten Kalibrierungsbedingungen durchzuführen. Diese Messung kann dann später mit den eigentlichen Ortungsmessungen vor Ort abgeglichen werden.

Auch ist es möglich, eine solche Referenzmessung, die ein definiertes Meßsignal M(ω) ergibt, mittels eines "Master-Meßgerätes" durchzuführen und die für das "Master-Gerät" ermittelten Referenzwerte in Form eines Kennfeldes in weitere Meßgeräte direkt nach der Fertigung einzuspielen. In diesem Fall wäre es auch möglich, beispielsweise Exemplarstreuungen der Richtcharakteristik des elektrischen Feldes des Meßkondensators der Einzelgeräte zu kompensieren.

Unterschiedliche Richtcharakteristiken aufgrund von mechanischen bzw. geometrischen Unterschieden der Kondensatorelektroden bzw. entsprechender Richtelektroden für das elektrische Meßfeld bedeuten Unterschiede bezüglich des detektierten Ortes für ein eingeschlossenes Objekt und machen die Vergleichbarkeit der mit verschiedenen Geräten gewonnenen Meßdaten schwierig.

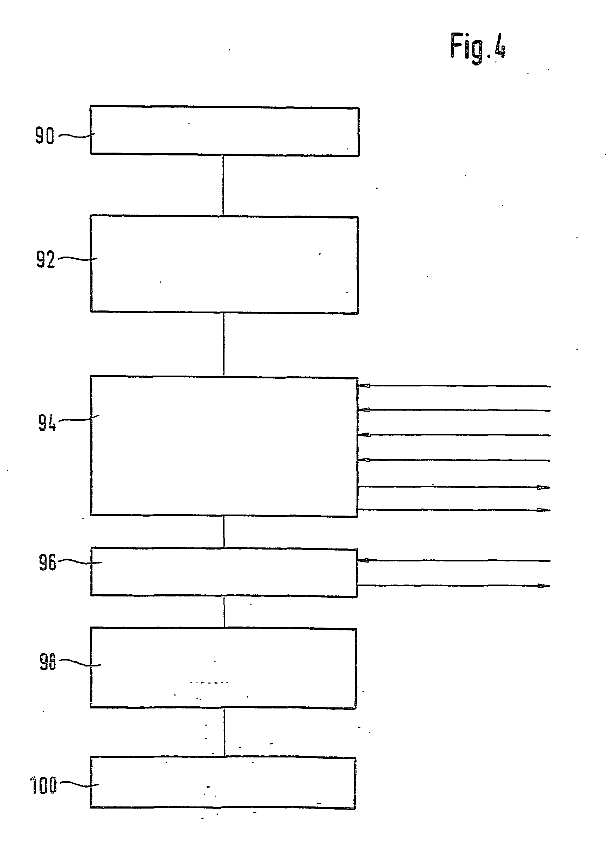

Fig. 4 zeigt an Hand eines Blockdiagrammes den Ablauf der Messung von Referenzwerten, die beispielsweise bereits direkt nach der Fertigung des erfindungsgemäßen Gerätes, noch im Werk gemessen, in einem Speicherelement des Meßgerätes abgelegt werden können. Im Schritt 90 wird eine Benutzerführung in ein Speicherelement des erfindungsgemäßen Meßgerätes eingeschrieben, die als animierte Filmsequenz auf einem Display des Meßgerätes wiedergebbar ist, und so dem Benutzer die zur Kalibrierung des Meßgerätes vor Ort durchzuführenden Verfahrensschritte näherbringt.

Im Verfahrensschritt 92 werden Referenzmessungen durchgeführt und im Gerät abgespeichert, die dazu dienen, die geräteindividuellen Systemparameter zu bestimmen. Dazu wird das an definierten Impedanzen vermessene Meßsignal ausgewertet und eine Korrekturfunktion linearer Ordnung für jedes einzelne Meßgerät erstellt. Mit Hilfe dieser Korrekturfunktion ist es möglich, Exemplarstreuungen, beispielsweise der mechanischen Ausführung der kapazitiven Sensorvorrichtung, aus dem späteren vor Ort gemessenen Signal herauszurechnen.

In Verfahrensschritt 94 wird das Meßgerät auf verschiedene, definierte Untergrundmaterialien eingemessen. Die Meßwerte dieser Referenzmessungen, beispielsweise an Luft, Beton, Metall sowie Ytong (Gasbeton) und weiterer verbreiteter Baumaterialien werden im Gerät abgespeichert. An Hand der bekannten Dielektizitätskonstanten dieser definierten Materialien lassen sich die durch das Detektionsnetzwerk bedingten Konstanten $\alpha(\omega)$ sowie $\beta(\omega)$, die den Zusammenhang zwischen dem dielektrischen Verschiebestrom der kapazitiven Sensorvorrichtung und dem zur Auswertung herangezogenen Meßsignal $M(\omega)$ bilden, bestimmen. Durch eine solche Referenzmessung ist es also möglich, die Signalverzerrungen, die sich aufgrund von Phasenverzerrungen sowie der Frequenzcharakteristik der Signalleitungen, bzw. ein internes Übersprechen zwischen den Elektroden des Meßkondensators einstellen, zu bestimmen. Auf diese Weise ist es möglich, bei einer späteren Bestimmung des Meßsignals $M(\omega)$ vor Ort mit Hilfe der dann bekannten Koeffizienten $\alpha(\omega)$ bzw. $\beta(\omega)$ sehr genau auf den zugrunde liegenden dieelektrischen Verschiebestrom zurückzuschließen.

In Verfahrensschritt 94 werden ebenfalls Interpolationsparameter für das im Verfahren zugrunde gelegte Model des einschließenden Mediums gewonnen. Das erfindungsgemäße Verfahren benutzt ein numerisches Model für das einschließende Medium, welches mehrere Materialparameter definierter Referenzmaterialien benutzt. Durch eine Vergleichsoptimierung zwischen dem vor Ort gemessenen Signal des umgebenden Mediums mit den Parametern des im Meßgerät abgelegten Models ist es möglich, die dieelektrischen Eigenschaften des gemessenen umgebenden Mediums sehr genau zu bestimmen. Im Wesentlichen wird eine Interpolation der dem Model zugrundeliegenden Referenzparameter auf den vor Ort gemessenen Wert des einschließenden Mediums genutzt.

In Verfahrensschritt 96 wird eine Bestimmung eines Geometriefaktors der kapazitiven Sensorvorrichtung durchgeführt. Dazu wird ein Referenzsignal an einem definierten, räumlich sehr begrenzten Referenzkörper, der in einem bekannten Medium eingeschlossen ist, vermessen. Aufgrund von mechanischen oder geometrischen Abweichungen der Elektroden der kapazitiven Sensorvorrichtung kann es zu Unterschieden in der Richtcharakteristik des Meßkondensators kommen, so dass eine Unsicherheit in der genauen Bestimmung des Ortes des eingeschlossenen Gegenstandes die Folge wäre. In Verfahrensschritt 96 werden daher Korrekturparameter zur Berücksichtigung der Abweichungen der Richtcharakteristik einzelner Meßgeräte für jedes einzelne Meßgerät ermittelt und in diesem Meßgerät abgelegt, so dass der auswertende Algorithmus diese Parameter abrufen und berücksichtigen kann.

Verfahrensschritt 98 der in Fig. 4 gezeigten Werkseinstellung von Referenzwerten für das erfindungsgemäße Verfahren bzw. das erfindungsgemäße Meßgerät ermittelt aus den durchgeführten Referenzmessungen Schwellwerte für die Objektdetektion. Mit Hilfe dieser Schwellwerte entscheidet der verarbeitende Algorithmus, ob ein Objekt als detektiert oder nicht gilt. Diese Schwellwerte sind abhängig von der Meßgenauigkeit jedes einzelnen Gerätes sowie auch von entsprechenden Exemplarstreuungen.

Verfahrensschritt 100 der Fig. 4 bezeichnet das Ablegen zuvor ermittelter Einstellungen in einem Speicherelement des erfindungsgemäßen Meßgerätes. Mit Hilfe dieser abgelegten Referenzwerte und einer vor der eigentlichen Messung vor Ort durchzuführenden Kallibrierungsmessung ist es möglich, Störeinflüsse auf das Meßsignal weitgehendst auszuschalten, so dass ein extrem genauer Meßsensor realisiert werden konnte. Dabei ist besonders hervorzuheben, dass beispielsweise auch Kunststoffrohre mit diesem Meßsensor erkannt werden können. Wesentlichen Einfluß auf die erhöhte Leistungsfähigkeit des erfindungsgemäßen Meßgerätes bzw. des zugrundeliegenden erfindungsgemäßen Verfahrens hat die Aufnahme einer Vielzahl von Referenzwerten, die es ermöglichen, Störeffekte bei der späteren Signalauswertung herauszurechnen.

Ein zentraler Punkt des erfindungsgemäßen Verfahrens ist es, das auszuwertende Meßsignal $M(\omega)$ in zwei Anteile aufzuspalten. Das Meßsignal $M(\omega)$ wird in einen Untergrundanteil $UG(\omega)$, der von dem einschließenden Medium herrührt und in einen Einschlußanteil $E(\omega)$, der aus einem eingeschlossenen Objekt resultiert, aufgeteilt.

Einschlußsignal als auch Untergrundsignal sind aufgrund der Messung der Signalgröße $M(\omega)$ sowohl in Phase als auch Amplitude bekannt. Dabei ist zu beachten, dass das durch dielektrische Einschlüsse vermittelte Einschlußsignal $E(\omega)$ extrem klein ist. Kapazitätsänderungen, welche es aufgrund eines eingeschlossenen Objektes zu bestimmen gilt, liegen bei dieelektrischen Einschlüssen, wie beispielsweise Kunststoffrohren typischerweise im Subpikofarad-Bereich. Diese kleinen Änderungen resultieren bei einer angelegten Wechselspannung an den kapazitiven Sensor von beispielsweise einem Volt und einer Meßfrequenz von 100 KHz somit in Differenzen des Verschiebestroms von weniger als einem Mikroampere.

Aus diesem Grunde wird bei dem erfindungsgemäßen Verfahren eine Meßfrequenz im Gigahertzbereich genutzt, um selbst für geringste Kapazitätsänderungen aufgrund eines eingeschlossenen Objektes noch hinreichend große Änderungen im Meßsignal zu erzeugen. Das Untergrundsignal bezeichnet dabei das Signal, welches sich ohne Vorhandensein von Objekten ergäbe. Es kann beispielsweise direkt neben einem Einschluß gemessen werden. Erfindungsgemäß wird ausgenutzt, dass das Untergrundsignal dominiert wird von Anteilen des Verschiebestromes, welche durch die oberflächennahen Bereiche des elektrischen Meßfeldes erzeugt werden.

Im Folgenden sei vorausgesetzt, dass das Untergrundsignal $UG(\omega)$ bekannt ist. Das Untergrundsignal $UG(\omega)$ setzt sich aus Verschiebeströmen $Iv(\omega)$ entlang der Feldlinien $\nu$ des elektrischen Feldes des Meßkondensators zusammen. Die einzelnen Feldlinien $\nu$ haben, wie beispielsweise der Fig. 1 zu entnehmen ist, unterschiedliche Längen. Man kann somit eine mittlere Feldlinienlänge L definieren, welche die Phase des Verschiebestromes angibt. Alle Phasen werden im Folgenden relativ zu dieser mittleren Phase angegeben. Bringt man einen dielektrischen Einschluß in die Nähe der Meßelektroden der kapazitiven Sensorvorrichtung, so verändert sich die Stromverteilung des Verschiebestromes. In der Praxis kann man voraussetzen, dass diese Änderung durch ein eingeschlossenes Objekt klein ist, d. h. es gilt:

$$E(\omega) \ll UG(\omega).$$

Man kann daher näherungsweise annehmen, dass der Einfluß des dielektrischen Einschlusses zu einer Verstärkung oder zu einer Schwächung des Verschiebestroms Iv entlang einzelner Feldlinien $\nu$ mit der Länge Lv führt. D. h. es gilt:

$$Iv(\omega)(\text{mit Einschluss}) =$$

$$= \xi * Iv(\omega)(\text{Untergrund}) * \exp(\ i*2\pi/\lambda(\omega)*(Lv-L))$$

Hierbei bezeichnet $\xi$ einen reellen Verstärkungs- oder Schwächungsfaktor. Ist die Dielektrizitätskonstante $\varepsilon$ des Einschlusses größer als das $\varepsilon$ des umgebenden Mediums, so gilt $\xi > 1$. Die Kapazität des Meßkondensators wird erhöht und der Verschiebestrom wird vergrößert. Andernfalls gilt $\xi < 1$. Ist der Einschluß klein genug, so dass nur Feldlinien einer bestimmten Länge Lv betroffen sind, so gilt näherungsweise:

$$E(\omega)= (\ Iv(\omega)(\text{mit Einschluss})- Iv(\omega)(\text{Untergrund})\ )$$

$$= (1-\xi)* \exp(\ i*2\pi/\lambda(\omega)*(Lv-L))*Iv(\omega)(\text{Untergrund})$$

Ist die Art des Einschlusses bekannt, beispielsweise ein metallischer Einschluß bzw. ein Hohlraum, so ist das Vorzeichen von $(1-\xi)$ bekannt.

Es gilt dann:

$$2\pi/\lambda(\omega)*(Lv-L)= -\Phi(\omega)+\Psi(\omega)$$

D.h. aus einem Vergleich der Phase des Signals $E(\omega)$ mit der Phase des Untergrundsignals $UG(\omega)$ läßt sich an Hand der Beziehung:

**EP 1 478 949 B1**

$$\lambda(\omega)/2\pi *(- \Phi(\omega)+\Psi(\omega)) +L = L\nu$$

auf die Länge der betroffenen Feldlinien Lv zurück schließen. Die Länge der betroffenen Feldlinien hängt über einem Geometriefaktor G (ω,L) mit der Tiefe des Objektes zusammen.

In der Praxis führt das Gerät eine Mittelung über ein Ortsintervall [x,y] durch in dem überwiegend keine Einschlüsse vorhanden sind. So ergibt der räumliche Mittelwert von MW_M(ω) einen brauchbaren Ansatzpunkt für die Untergrundkomponente. Das heisst, wenn die Messgröße M(Xj,ω) an n Orten Xj erfasst wurde, so ist zur Bestimmung der Untergrundkomponente für alle j über M(Xj,ω) zu summieren und mit 1/N zu normieren.

Als mögliche Erweiterung dieses grundlegenden Mittelungsverfahrens ist es vorteilhaft, Bereiche mit starken Signalveränderungen, das heisst, großen Abweichungen vom Mittelwert aus der Mittelwertbildung auszuschließen oder die Bildung des Mittelwerts durch die Bildung des Medians der Messdaten über den Ort zu ersetzen.

Es ist weiterhin möglich, anstelle der Mittelung über verschiedene Orte, im Speicher abgelegte tabellierte Untergrundsignale MUG(ω) heranzuziehen. Ist beispielsweise bekannt, dass es sich beim Untergrund um Beton handelt, so ist es möglich, im Speicher abgelegte Messwerte MUGBETON(ω), wie sie sich für einen homogenen Betonblock ergeben, als Untergrundsignal zu verwenden. Die Auswahl des abzuziehenden, gespeicherten Untergrundsignals kann sowohl automatisch, z.B. anhand eines Vergleichs eines geschätzten Untergrundsignals mit verschiedenen tabellierten Untergründen, oder mittels eines vom Benutzer zu bedienenden Schalters erfolgen.

Für den Untergrund wird ein numerisches Modell benutzt, welches mindestens vier Materialparameter, beispielsweise die Dieelektrizitätskonstanten von bekannten Werkstoffen benutzt. Dem Modell zugrundegelegt ist das Reflexionsverhalten elektromagnetischer Signale an dieelektrischen Grenzschichten. Zur Ermittlung des Materials des gemessenen, einschließenden Mediums wird die Gewichtung der Parameter im Modell des einschließenden Mediums solange variiert, bis durch eine Vergleichsoptimierung ein dem gemessenen Untergrundsignal möglichst nahekommendes Modellsignal rekonstruierbar ist. Aufgrund einer Interpolation der Parameter des Modellmediums kann somit auf die Dieelektrizitätskonstante des gemessenen, einschließenden Mediums geschlossen werden. Bei Kenntnis der Dieelektrizitätskonstanten des einschließenden Mediums läßt sich aus der Phaseninformation des Meßsignales, welches ausgeht vom eingeschlossenen Objekt, auf die Tiefe des eingeschlossenen Objektes im einschließenden Medium zurückschließen.

Erfindungsgemäß ist bei dem beschriebenen Verfahren vorgesehen, dass die Schwelle zur Detektion eingeschlossener Objekte variierbar ist. Durch eine Empfindlichkeitseinstellung ist es möglich, beispielsweise irrelevante Objekte, insbesondere mit einer periodischen Struktur, aus dem Meßsignal herauszurechnen, so dass dieses bei einer späteren optischen Anzeige der Meßergebnisse nicht mehr in Erscheinung tritt. Auch ist es durch das erfindungsgemäße Verfahren möglich, aufgrund eines gewählten speziellen Bereichs von Phasenverschiebungen des Meßsignals eine Beschränkung des Meßbereichs auf einen gewünschten Tiefenbereich zu erzeugen. Auf diese Weise läßt sich die Selektion eines speziellen, begrenzten Tiefenbereichs realisieren. Die angezeigte Meßtiefe in der optischen Wiedergabe des Displays des erfindungsgemäßen Meßgerätes läßt sich zwischen verschiedenen Werten (beispielsweise 6 bzw. 10 cm) umschalten.

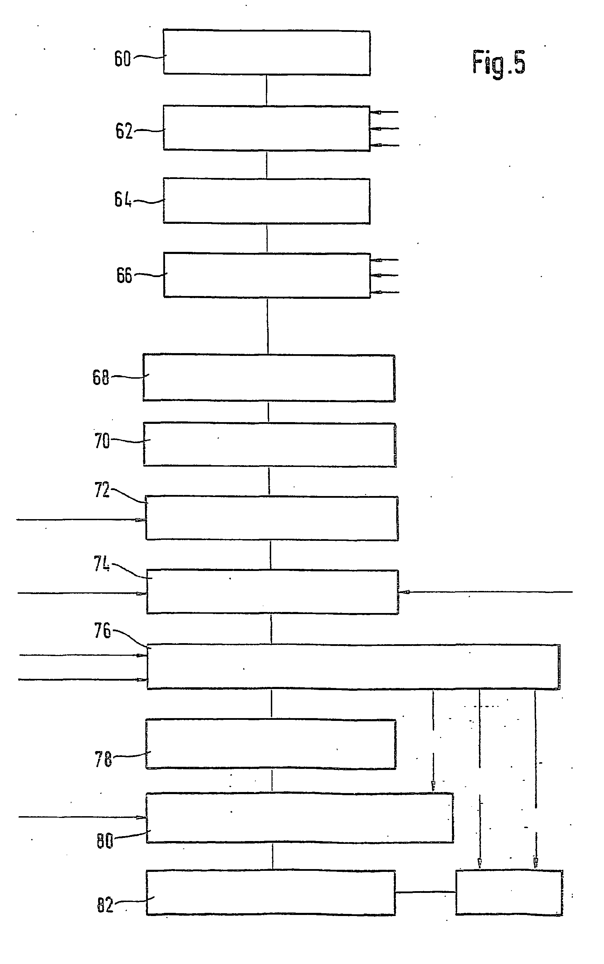

Abbildung 5 zeigt zur Übersicht ein Blockdiagramm zur Verdeutlichung der einzelnen Verfahrensschritte des erfindungsgemäßen Verfahrens.

Nach dem Einschalten des Gerätes in Schritt 60 erfolgt eine Systemabfrage für das Meßgerät. Die Systemabfrage 62 überprüft beispielsweise den Batteriestatus (Batteriespannung), den Innenwiderstand der Batterie sowie die vorliegende Temperatur. Anschließend wird in Schritt 64 eine Referenzmessung an einer definierten Impedanz durchgeführt. Dazu kann beispielsweise eine geräteinterne Referenzvorrichtung genutzt werden oder es kann auch eine Luftmessung durchgeführt werden. Diese Referenzmessung wird auch durchgeführt zur Bestimmung von EMV-Störungen, beispielsweise durch benachbarte Sendeanlagen. Solche EMV-Störungen lassen sich mit dem erfindungsgemäßen Verfahren später aus dem Meßsignal herausrechnen.

In Schritt 66 des erfindungsgemäßen Verfahrens erfolgt eine Wandkontaktüberprüfung, bei der durch Abfrage der entsprechenden Weggeber des erfindungsgemäßen Meßgerätes sichergestellt wird, dass das Meßgerät vorschriftsmäßig auf der zu untersuchenden Wand aufgesetzt ist. Alternativerweise kann der Wandkontakt auch durch die Auswertung des Messsignals der kapazitiven Sensorvorrichtung abgefragt werden. Ermittelt das Messgerät als umgebendes Medium Luft, so kann das Gerät nicht auf der Wand aufgesetzt sein.

Anschließend erfolgt der eigentliche Meßvorgang, bei dem in Verfahrensschritt 68 Rohdaten der kapazitiven Sensorvorrichtung gemessen und an den digitalen Signalprozessor weitergeleitet werden. In Verfahrensschritt 70, der den Beginn der Auswertung des Meßsignals darstellt, werden Störsignale durch externe Störquellen aus den Rohdaten herausgerechnet. Anschließend erfolgt in Verfahrensschritt 72 eine erste Korrektur des Meßsignals aufgrund von Exemplarstreuungen. Dazu wird der werksseitig durch eine Referenzmessung ermittelte, geräteindividuelle Systemparameter, d.h. die entsprechenden Korrekturkoeffizienten, berücksichtigt und das Meßsignal in beschriebener, linearer Weise transformiert. Verfahrensschritt 74 beschreibt die Korrektur von geräteinternen Drifteffekten wie beispielsweise Temperatur- und Alterungseinflüsse. Zur Ermittlung einer entsprechenden Korrekturfunktion für das Meßsignal M(ω) wird im Verfahrensschritt 74 ein Vergleich zwischen einer im Werk durchgeführten und im Gerät abgespeicherten Referenzmessung an einer definierten Impedanz sowie dem Ergebnis der aktuellen Referenzmessung nach Verfahrensschritt 64 durchgeführt. Für das so aufgearbeitete Meßsignal M*(ω) wird nun in Verfahrensschritt 76 die beschriebene Trennung in Signalanteile vom einschließenden Medium und Signalanteile, die vom eingeschlossenen Objekt herrühren, durchgeführt. Über die im Gerät abgespeicherten Kenngrößen für Referenzmaterialien und ein entsprechendes mathematisches Modell für die Zusammensetzung des einschließenden Mediums wird das gemessene Wandmaterial durch Interpolation mit den Referenzwerten bestimmt. Insbesondere wird dem gemessenen Wandmaterial bzw. dem einschließenden Medium eine Dielektrizitätskonstante zugewiesen, die für die weitere Auswertung des Meßsignals benötigt wird.

Nach der Trennung des Detektionssignals in Signalanteile ausgehend vom einschließenden Medium bzw. ausgehend vom eingeschlossenen Objekt wird zur Bestimmung der genauen Ortsposition des eingeschlossenen Objektes in Verfahrensschritt 78 ein Geometriefaktor für die kapazitive Sensorvorrichtung berücksichtigt. Dieser Geometriefaktor berücksichtigt beispielsweise fertigungsbedingte, geometrische Abweichungen in der Richtcharakteristik der kapazitiven Sensorvorrichtung. Diese geräteindividuellen Unterschiede können durch eine lineare Korrekturfunktion berücksichtigt und aus dem eigentlichen Meßsignal herausgerechnet werden.

Unter Berücksichtigung der werksseitig eingestellten Schwellwerte für die Objektdetektion wird in Verfahrensschritt 80 durch die Signalverarbeitung die Entscheidung getroffen, ob ein Objekt geortet worden ist oder nicht. Im Fall einer positiven Entscheidung wird anschließend die Objektgröße, dessen relative Lage zum Meßgerät sowie die Objekttiefe des eingeschlossenen Objektes über die beschriebene Auswertung des Betrages und der Phase der Meßgröße M*(ω) bestimmt. Insbesondere wird die Tiefe des eingeschlossenen Objektes in der Wand aus der Phase der Meßgröße M*(ω) sowie der in Verfahrensschritt 76 ermittelten Dielektrizitätskonstanten des Wandmaterials ermittelt.

In Verfahrensschritt 82 wird das resultierende Meßergebnis in grafischer Form auf dem Display des Meßgerätes angezeigt. Dazu wird die Position des georteten Objektes relativ zur aktuellen Position des Meßgerätes, die Objektgröße sowie die Objekttiefe mittels symbolischer Darstellungen derart auf der Anzeigevorrichtung des Meßgerätes wiedergegeben, dass der Anwender ein Schnittbild der untersuchten Wand erhält.

Insbesondere ist es möglich, auf dem Display des Meßgerätes beispielsweise auch in grafischer Weise eine zulässige Bohrtiefe anzuzeigen, die möglich ist, ohne das geortete Objekt beim Bohrvorgang zu treffen. Die Darstellung der Meßergebnisse auf dem Display des Meßgerätes erfolgt in Echtzeit, so dass noch während das Meßgerät über einen Wandabschnitt verfahren wird, das geortete Objekt lediglich mit einer kurzen zeitlichen Verzögerung auf dem Bildschirm des erfindungsgemäßen Meßgerätes dargestellt wird.

**Patentansprüche**

1. Verfahren zur Ortung von in einem Medium (10) eingeschlossenen Objekten (12), bei welchem mittels zumindest einer kapazitiven Sensorvorrichtung (14) ein Detektionssignal erzeugt wird, und durch eine Auswertung des durch das Detektionssignal vermittelten Verschiebestroms Informationen über in dem Medium (10) eingeschlolssene Objekte (12) gewonnen werden, indem die Impedanz der Sensorvorrichtung (14) in Betrag und Phase gemessen wird, **dadurch gekennzeichnet, dass** zur Erlangung einer Tiefeninformation (d) über ein in ein Medium (10) eingeschlossenes Objekt (12) eine Phasenmessung einer mit der Impedanz verknüpften Messgröße, welche mit dem innerhalb der kapazitiven Sensorvorrichtung (14) fließenden, durch das Detektionsfeld (28) vermittelten Verschiebestroms korreliert ist, genutzt wird, wobei das Detektionssignal mittels einer Wegsensorik als Funktion der lateralen Verschiebung der das Detektionssignal generierenden, kapazitiven Sensorvorrichtung (14) gemessen und ausgewertet wird.

2. Verfahren nach Anspruch 1, **dadurch gekennzeichnet, dass** ein linearer Zusammenhang zwischen der Messgröße und dem Verschiebestrom der kapazitiven Sensorvorrichtung (14) genutzt wird.

3. Verfahren nach Anspruch 1 oder 2, **dadurch gekennzeichnet, dass** ein elektrisches Spannungssignal zur Auswertung des Detektionssignales in Betrag und Phase gemessen wird.

4. Verfahren nach Anspruch 1, 2 oder 3, **dadurch gekennzeichnet, dass** eine von einem eingeschlossenen Objekt (12) erzeugte Phasenverschiebung des Verschiebestromes der kapazitiven Sensorvorrichtung (14) zur Detektion des Objektes (12) genutzt wird.

5. Verfahren nach einem der Ansprüche 1 bis 4, **dadurch gekennzeichnet, dass** das Detektionssignal mehr als eine Messfrequenz aufweist.

**6.** Verfahren nach Anspruch 5, **dadurch gekennzeichnet, dass** eine oder mehrere Messfrequenz(en) des Detektionssignals in einem Intervall von 100 MHz bis 10000 MHz, vorzugsweise in einem Intervall von 500 MHz bis 5000 MHz, und optimalerweise in einem Intervall von 1000 MHz bis 3000 MHz verwendet werden.

**7.** Handgehaltenes Ortungsgerät (18) zur Ortung von in einem Medium (10) eingeschlossenen Objekten (12), mit einer Sensorvorrichtung (14), mit Mitteln zur Erzeugung eines Detektionssignals für diese Sensorvorrichtung (14), sowie mit einer Wegsensorik zur Ermittlung der Position der kapazitiven Sensorvorrichtung (14), ferner mit einer Steuer- und Auswerteeinheit zu Ermittlung von Messwerten aus dem Detektionssignal, sowie mit einer Ausgabevorrichtung für die ermittelten Messwerte, zur Durchführung eines Verfahrens nach einem der Ansprüche 1 bis 6.

**8.** Messgerät nach Anspruch 7, **dadurch gekennzeichnet, dass** das Messgerät Mittel aufweist, die es ermöglichen, Messergebnisse, insbesondere den Ort beziehungsweise der Ort und die Tiefe eines in einem Medium (10) eingeschlossenen Objektes (12), ortsaufgelöst auf einer Anzeigevorrichtung des Messgerätes darzustellen.

## Claims

**1.** Method for locating objects (12) enclosed in a medium (10), in which a detection signal is produced using at least one capacitive sensor apparatus (14), and information relating to objects (12) enclosed in the medium (10) is obtained by evaluating the displacement current conveyed by the detection signal by measuring the magnitude and phase of the impedance of the sensor apparatus (14), **characterized in that** a phase measurement of a measurement variable, which is linked to the impedance and is correlated with the displacement current flowing inside the capacitive sensor apparatus (14) and conveyed by the detection field (28), is used to obtain an item of depth information (d) relating to an object (12) enclosed in a medium (10), the detection signal being measured and evaluated using a displacement sensor system as a function of the lateral displacement of the capacitive sensor apparatus (14) which generates the detection signal.

**2.** Method according to Claim 1, **characterized in that** a linear relationship between the measurement variable and the displacement current of the capacitive sensor apparatus (14) is used.

**3.** Method according to Claim 1 or 2, **characterized in that** the magnitude and phase of an electrical voltage signal are measured in order to evaluate the detection signal.

**4.** Method according to Claim 1, 2 or 3, **characterized in that** a phase shift of the displacement current of the capacitive sensor apparatus (14), which is produced by an enclosed object (12), is used to detect the object (12).

**5.** Method according to one of Claims 1 to 4, **characterized in that** the detection signal has more than one measurement frequency.

**6.** Method according to Claim 5, **characterized in that** one or more measurement frequencies of the detection signal are used in a range of 100 MHz to 10,000 MHz, preferably in a range of 500 MHz to 5000 MHz, and optimally in a range of 1000 MHz to 3000 MHz.

**7.** Handheld locating device (18) for locating objects (12) enclosed in a medium (10), having a sensor apparatus (14), having means for producing a detection signal for this sensor apparatus (14), and having a displacement sensor system for determining the position of the capacitive sensor apparatus (14), and also having a control and evaluation unit for determining measured values from the detection signal as well as an output apparatus for the determined measured values, for carrying out a method according to one of Claims 1 to 6.

**8.** Measuring device according to Claim 7, **characterized in that** the measuring device has means which make it possible to display measurement results, in particular the location or the location and the depth of an object (12) enclosed in a medium (10), in a spatially resolved manner on a display apparatus of the measuring device.

## Revendications

**1.** Procédé de localisation d'objets (12) contenus dans un milieu (10), selon lequel un signal de détection est généré à l'aide d'au moins un dispositif de détection capacitif (14) et des informations sur les objets (12) contenus dans le milieu (10) sont obtenues par une interprétation du courant de décalage communiqué par le signal de détection en mesurant la valeur et la phase de l'impédance du dispositif de détection (14), **caractérisé en ce que** pour obtenir une information de profondeur (d) sur un objet (12) contenu dans un milieu (10) est utilisée une mesure de phase d'une grandeur de mesure combinée avec l'impédance, laquelle est corrélée avec le courant de décalage qui circule à l'intérieur du dispositif de détection capacitif (14) et communiqué par le champ de détection (28), le signal de détection étant mesuré et interprété à l'aide d'un dispositif de détection de position en fonction du décalage latéral du dispositif de détection capacitif (14) qui génère le signal de détection.

2. Procédé selon la revendication 1, **caractérisé en ce qu'**une relation linéaire entre la grandeur de mesure et le courant de décalage du dispositif de détection capacitif (14) est utilisée.

3. Procédé selon la revendication 1 ou 2, **caractérisé en ce qu'**un signal de tension électrique est mesuré en vue de l'interprétation de la valeur et de la phase du signal de détection.

4. Procédé selon la revendication 1, 2 ou 3, **caractérisé en ce qu'**un déphasage du courant de décalage du dispositif de détection capacitif (14), généré par un objet (12) contenu, est utilisé pour la détection de l'objet (12).

5. Procédé selon l'une des revendications 1 à 4, **caractérisé en ce que** le signal de détection présente plus d'une fréquence de mesure.

6. Procédé selon la revendication 5, **caractérisé par** l'utilisation d'une ou plusieurs fréquence(s) de mesure du signal de détection dans un intervalle de 100 MHz à 10 000 MHz, de préférence dans un intervalle de 500 MHz à 5 000 MHz, et de manière optimale dans un intervalle de 1 000 MHz à 3 000 MHz.

7. Détecteur de position (18) portatif pour la localisation d'objets (12) contenus dans un milieu (10), comprenant un dispositif de détection (14), comprenant des moyens pour générer un signal de détection pour ce dispositif de détection (14) et comprenant un dispositif de détection de position pour déterminer la position du dispositif de détection capacitif (14), comprenant en outre une unité de commande et d'interprétation pour déterminer des valeurs de mesure à partir du signal de détection ainsi qu'un dispositif de diffusion pour les valeurs de mesure déterminées, conçu pour mettre en oeuvre un procédé selon l'une des revendications 1 à 6.

8. Appareil de mesure selon la revendication 7, **caractérisé en ce que** l'appareil de mesure présente des moyens qui permettent de représenter des résultats de mesure sur un dispositif d'affichage de l'appareil de mesure, notamment l'emplacement ou l'emplacement et la profondeur d'un objet (12) contenu dans un milieu (10) avec résolution de la position.

Fig.1

Fig.2

EP 1 478 949 B1

## Fig.3

$$M^{-10°C}(\omega) = \gamma^0(\omega) \cdot [M^{20°C}(\omega)] + \gamma^1(\omega)$$

Fig.4

90

92

94

96

98

100

Fig.5

60

62

64

66

68

70

72

74

76

78

80

82

**EP 1 478 949 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6249113 B1
- WO 9404932 A
- US 6198271 B1
- WO 9830921 A